(19) Europäisches Patentamt
European Patent Office
Office européen des brevets

(11) EP 2 244 458 A1

(12) **EUROPEAN PATENT APPLICATION**

(43) Date of publication:
27.10.2010 Bulletin 2010/43

(51) Int Cl.:
H04N 5/08 (2006.01)   H04N 5/44 (2006.01)
H04N 17/04 (2006.01)   H04N 5/46 (2006.01)

(21) Application number: 10156790.7

(22) Date of filing: 17.03.2010

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA ME RS

(30) Priority: 30.03.2009 TR 200902470

(71) Applicant: Vestel Elektronik Sanayi ve Ticaret A.S.
45030 Manisa (TR)

(72) Inventor: Ardali, Emre
45030 Manisa (TR)

(74) Representative: Cayli, Hülya
Paragon Consultancy Inc.
Koza Sokak No: 63/2
GOP
06540 Ankara (TR)

(54) **Method and circuit for recovering the correct timing of a received analogue video signal**

(57) It is described a method and circuit for recovering the correct timing of a received analogue video signal, especially for a robust system against analogue signal timing shift. The circuit uses signal timing measurement result of a dedicated hardware block, and identifies the incoming signal. It uses both horizontal and vertical timing information to have correct detection result.

(PPHL)=fs/fh

Figure – 1

EP 2 244 458 A1

## Description

## Field of the Invention

The invention relates to a method and circuit for recovering the correct timing of a received analogue video signal, especially for a robust system against analogue signal timing shift.

## Description of the Prior Art

TV systems with analogue signal interface, such as CVBS (Colour Video Baseband Signal) or YpbPr (a different colour space, usually used for RCA (chinch) video interface between TV and DVDs ) are used in consumer market commonly.

Those analogue signals have well defined timings (horizontal, vertical frequencies) but also open some analogue effects due to poor quality transmitters, present for example in DVDs, VCRs, etc., transmitting video signals to the output, for example towards a TV. Those analogue effects are such as shift in horizontal/vertical timings of the signal. Since the known TV systems expect analogue signals which strictly fit the specifications, they are not to be able to display any analogue signal which is slightly out of specification in terms of horizontal/vertical timings.

Usual TV receiver systems use the standard signal timing specifications during the detection of the incoming analogue signal (i.e. 720p YPbPr signal has 1650 horizontal pixels, 750 vertical lines totally) and generally only the horizontal timing is controlled for proper signal detection. Normally compensation for the modified signal timing is very limited. Any slightly modified analogue signal due to some undesired effects (poor quality transmitter, forward/backward search at VCR) cause "no signal" or "unknown format" condition at the receiver side.

The problem arises that known systems do not propose a robust design against undesired analogue effects on the video signal timings which may cause "no signal"/"unknown format" case. Even if the system can detect the proper video format, picture would not fit to active display area correctly.

Therefore there is a need for a new method that allows a robust design to overcome such kind of corrupted analogue signals, and at least gives the possibility to display those signals to user even if the user has poor quality analogue signal transmitter.

## Brief Description of the Invention

Therefore in view of the known solutions, that are not quite efficient, it is the main object of the present invention to provide a method and apparatus for giving robustness to the system (for example a TV receiver) against analogue video signals which have modified timings undesirably.

The basic idea of the present invention is to propose a device for measuring both horizontal and vertical timings; system adapts itself to the incoming signal according to measured values.

These and further objects are achieved by means of a circuit and method as described in the attached claims, which are considered an integral part of the present description.

## Brief Description of The Drawings

The invention will become fully clear from the following detailed description, given by way of a mere exemplifying and non limiting example, to be read with reference to the attached drawing figures, wherein:

- Figure 1 shows a timing diagram with a measurement of pixel per horizontal line, in accordance with the prior art;
- Figure 2 shows a block diagram of a circuit implementing the present invention;
- Figure 3 shows a flowchart of a software routine implementing the method of calculating the correct timing parameters.
- Figure 4 shows an example of a signal definition space with tolerances of 400Hz for horizontal frequency and 4Hz for vertical frequency.

## Detailed Description of Invention

Generally any analogue video signal has definite universal specifications, but it is possible to have some undesired changes on signal timings (field conditions). To detect some kind of analogue effects it is possible to measure the horizontal (pixel per line input) and vertical (line per field input) signal parameters. This can be obtained if the signal has either standard timings or modified timings. This measurement is performed by a special block, to be generally included in the digital video processor of the TV set. According to the measured parameters, the block decides signal format and adapts the TV system to display the signal correctly. Therefore the robust design needs both horizontal and vertical parameters measurement.

Commercial TVs with LCD display support different kinds of analogue video signals (such as CVBS, YPbPr, PC video) at different resolutions. Since there are different resolutions it is necessary a signal format identifier block measurement. Usually horizontal timing (detected pixels per each horizontal line) is used to identify the resolution of the incoming video signal (prior solution). Hence the signal is analogue, some undesired effect is possible on signal timings (i.e. horizontal period shifts) which may cause wrong format detection (i.e. identifying 576p as 480p unintentionally) or no signal identification. Proposed system uses also the vertical timing (horizontal lines per field) to correctly identify the modified analogue signal.

This is explained specifically with reference to the following example.

Consider that because of the bad quality of a YPbPr transmitter (i.e. in the DVD player) it is possible to have some horizontal period change, let say 150Hz. Normally 576p signal has 31.250Khz, 480p signal has 31.500Khz horizontal frequency defined by standard. And let say High Speed ADC of the video processor sampling the signals at 81 Mhz. After a rough slicing of the synchronisation pulses, the parameter PPHL "pixel per horizontal line" (number of available sample between two horizontal sync pulses) should be measured as:

$$PPHL=fs/fh$$

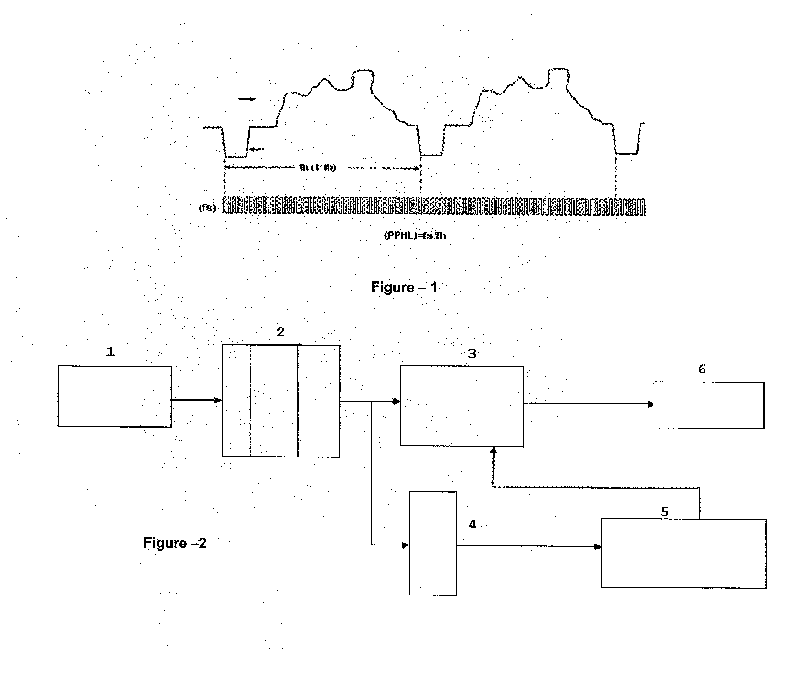

where fs is the sampling frequency, fh is the horizontal frequency of the incoming signal. Considering Figure 1, showing a measurement of pixel per horizontal line, if the signal is standard, then it is measured as:

PPHL@576p=81 Mhz/31.250Khz=2592 and
PPHL@480p=81 Mhz/31.500Khz=~2571

Any standard signal identifier can detect the format.

If we give a 150Hz tolerance to the identifier:

- 576p horizontal frequency might be between 31.100 KHz-31.400Khz, PPHL is between 2605-2580;
- 480p horizontal frequency might be between 31.350Khz-31.650Khz, PPHL is between 2584-2559.

As seen from the values, the upper limit for 576p overlaps the lower limit of 480p signal. Hence only horizontal timings are not enough as the tolerance increases. To overcome the issue, the method according to the invention proposes the vertical timing usage, lines per field (LPF) parameter. Considering the example above, 576p has 625 total lines per field and 480p has 525 lines per field. Hence adding a second dimension to the detection space gives the flexibility to detect any modified signal without misdetection. On the other hand it is also possible to readjust the scaling parameters using the measured values so that displayed signal well fits the display panel active area. On the other hand, it is also possible to use the same method to detect signals whose vertical timings are changed. (i.e. 576p with 627 lines instead of 625 standard lines)(This case has the lower possibility at field)

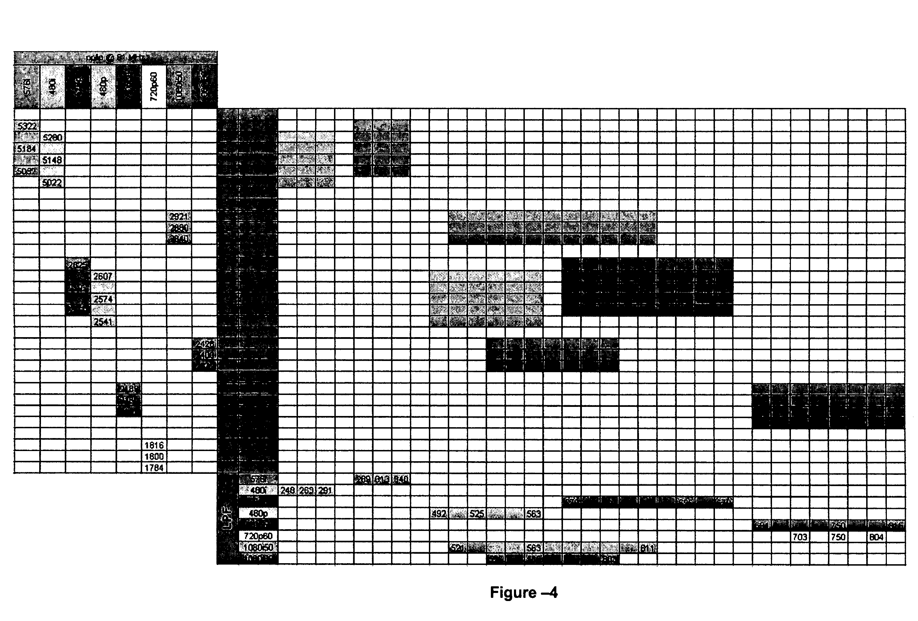

An example of valid signal area with the tolerances 400Hz for horizontal frequency and 4Hz for the vertical frequency is given in Figure 4. There is no overlapping area. If normal detection behaviour is used (horizontal timings only), the space is one dimensional and overlapping occurs (see 576p/480p and 576i/480i signals). So, correct detection of a modified signal is possible within the defined tolerance.

An embodiment example of a circuit according to the invention is shown in Figure 2. Block 1 is an input block for an analogue video signal, for example CVBS, YPbPr, PC video, or others.

The analogue video signal is supplied to block 2 which performs the following functions: it clamps the analogue signal, then converts it to digital form with an high speed ADC converter, then determines a rough slicing of the synchronization pulses and outputs the signal to a scaler (3), which has the function of adjusting the video contents to the display panel resolution.

The output of block 2 is also brought to block 4, which has the function of measuring the horizontal and vertical timings of the video signal. The output of block 4, namely the signal timing information is supplied to block 5, which performs a calculation of the correct signal parameters for any possible value of timing of the input video signal, and forwards it to the scaler (3). With this correct timing information, the scaler (3) can supply the correct video signal to the output to a display apparatus (6) for a correct video processing and display.

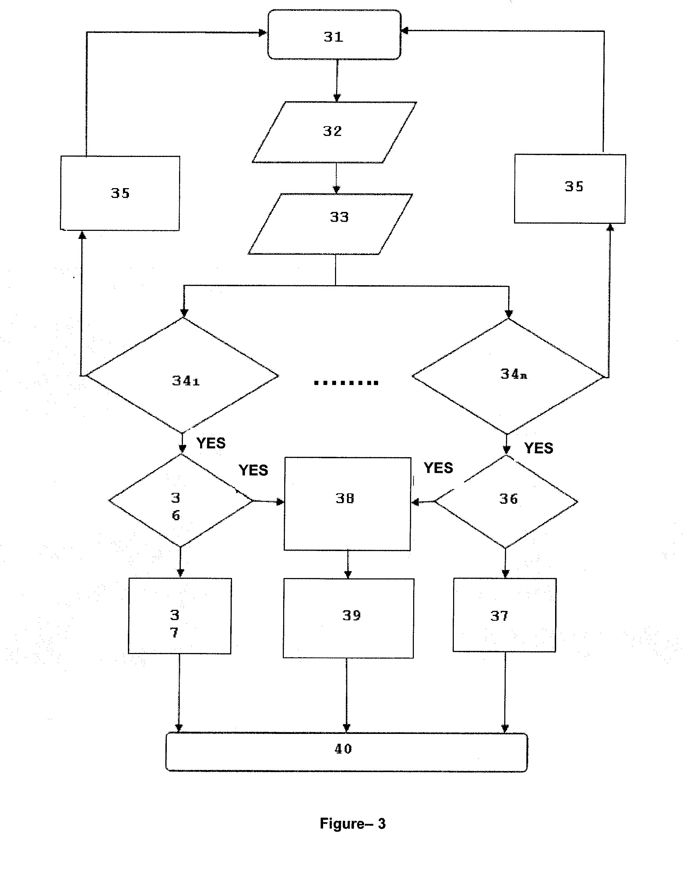

A possible implementation of the functions of block 5 is made by a software routine according to the flowchart of Figure 3.

At the start of detection (block 31), the routine reads the horizontal timing, namely pixels per line (block 32), and the vertical timing, namely lines per field (block 33) received from block 4.

In blocks $34_1$ .... $34_n$ the routine determines if pixel per line and line per field parameters are one of a number of possible video formats [1, ........ n], or anyway within an adjustable area around the standard timings of the possible video formats: the dimensions of the area can be determined on the basis of the desired tolerance on the signal timings.

If the parameters are out of the area, a warning is given (block 35) to end user of a "no standard" or "unknown format" condition.

If the parameters are within the adjustable area, a further determination is made (block 36) whether the video signal is a modified one, in a nonstandard timing condition.

If the timing is a standard one, namely just one of the possible video formats [1, ........ n], standard signal parameters are supplied to the output (block 37) to scaler (3).

If the timing is a nonstandard one, substantially within the area, a further function (block 38) calculates the scaling parameters according to the modified signal, and therefore the calculated signal parameters are supplied to the output (block 39) to scaler (3).

Block 40 ends the detection routine.

Further implementation details will not be described, as the man skilled in the art is able to carry out the invention starting from the teaching of the above description.

The present invention can be advantageously implemented, at least in part, through a program for computer comprising program coding means for the implementation of one or more steps of the method, when this program is running on a computer, especially concerning the above described procedure for calculation of the correct signal parameters for any possible value of timing of the input video signal. Therefore, it is understood that the scope of protection is extended to such a program for computer and in addition to a computer readable means having a recorded message therein, said computer readable means comprising program coding means for the implementation of one or more steps of the method, when this program is run on a computer.

Many changes, modifications, variations and other uses and applications of the subject invention will become apparent to those skilled in the art after considering the specification and the accompanying drawings which disclose preferred embodiments thereof. All such changes, modifications, variations and other uses and applications which do not depart from the spirit and scope of the invention are deemed to be covered by this invention.

## Claims

1. Circuit for recovering the correct timing of a received analogue video signal, comprising:

   - means for measuring the horizontal timing of the incoming analogue video signal;
   - means for measuring the vertical timing of the incoming analogue video signal;
   - means for determining the correct output video format on the basis of the measured horizontal and vertical timing of the incoming analogue video signal.

2. Circuit as in claim 1, wherein said means for measuring the horizontal timing of the incoming analogue video signal comprise means for measuring the number of pixels per line of the incoming analogue video signal, and said means for measuring the vertical timing of the incoming analogue video signal comprise means for measuring the number of lines per field of the incoming analogue video signal.

3. Circuit as in claim 2, wherein said means for determining the correct output video format comprise means for readjusting scaling parameters on the basis of said measured horizontal and vertical timing, and means for allowing a video signal to be displayed well fit a display panel active area also in a case where said received analogue video signal has a non-standard number of measured pixels per line and/or lines per field.

4. Circuit as in any of the previous claims, comprising:

   - a circuit (2) for clamping an input analogue video signal,
   - an analogue to digital converter of the clamped signal;
   - a circuit for slicing the synchronization pulses of the converted digital signal;
   - a scaler (3), which has the function of adjusting the video contents of the signal received from the slicer to the display panel resolution;
   - a circuit for measuring the horizontal and vertical timings of the video signal received from the slicer;
   - a circuit for calculating the correct signal parameters for the values of timing of the signal received from said circuit for measuring, and forwarding the correct signal parameters to said scaler (3).

5. Method for recovering the correct timing of a received analogue video signal, comprising the steps of:

   - measuring the horizontal timing of the incoming analogue video signal;
   - measuring the vertical timing of the incoming analogue video signal;
   - determining the correct output video format on the basis of the measured horizontal and vertical timing of the incoming analogue video signal.

6. Method as in claim 5, wherein said step of measuring the horizontal timing of the incoming analogue video signal comprises measuring the number of pixels per line of the incoming analogue video signal, and said step of measuring the vertical timing of the incoming analogue video signal comprises measuring the number of lines per field of the incoming analogue video signal.

7. Method as in claim 6, wherein said step of determining the correct output video format comprises readjusting scaling parameters on the basis of said measured horizontal and vertical timing, and determining a video signal to be displayed so as to well fit a display panel active area also in a case where said received analogue video signal has a non-standard number of measured pixels per line and/or lines per field.

8. Method as in claims 5 and 7 wherein a computer program comprising computer program code means performs at least one of the steps of said claims, when said program is run on a computer.

(PPHL)=fs/fh

th (1/fh)

(fs)

**Figure – 1**

**Figure –2**

Figure– 3

**Figure —4**

Europäisches
Patentamt

European
Patent Office

Office européen
des brevets

**EUROPEAN SEARCH REPORT**

Application Number

EP 10 15 6790

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 916 841 A2 (BROADCOM CORP [US]) 30 April 2008 (2008-04-30)<br>* paragraph [0025] *<br>* paragraph [0027] *<br>* paragraph [0062] *<br>* paragraph [0021] *<br>* paragraph [0022]; figure 2 *<br>* paragraph [0023] *<br>* paragraph [0004] *<br>* paragraph [0078] *<br>* paragraph [0079] *<br>* paragraph [0080] *<br>* paragraph [0071] *<br>* paragraph [0040] * | 1-8 | INV.<br>H04N5/08<br>H04N5/44<br>H04N17/04<br>H04N5/46 |
| X | US 5 367 337 A (PYLE HARRY S [US] ET AL) 22 November 1994 (1994-11-22)<br>* column 4, line 14 - column 10, line 35; claim 1; figure 5 * | 1-8 | |
| X | US 2005/030426 A1 (CHANG CHIEN-KEN [TW] ET AL) 10 February 2005 (2005-02-10)<br>* paragraph [0016] *<br>* paragraph [0015] * | 1-8 | TECHNICAL FIELDS SEARCHED (IPC)<br><br>H04N |

The present search report has been drawn up for all claims

| Place of search | Date of completion of the search | Examiner |
|---|---|---|
| Munich | 31 August 2010 | Thieme, Markus |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 15 6790

This annex lists the patent family members relating to the patent documents cited in  the above-mentioned European search report.
The members are as contained in the European Patent Office EDP file on
The European Patent Office is in no way liable for these particulars which are merely given for the purpose of information.

31-08-2010

| Patent document cited in search report | | Publication date | Patent family member(s) | | Publication date |
|---|---|---|---|---|---|
| EP 1916841 | A2 | 30-04-2008 | CN<br>KR<br>US | 101175178 A<br>20080038046 A<br>2008100742 A1 | 07-05-2008<br>02-05-2008<br>01-05-2008 |
| US 5367337 | A | 22-11-1994 | NONE | | |
| US 2005030426 | A1 | 10-02-2005 | TW | 222331 B | 11-10-2004 |

EPO FORM P0459

For more details about this annex : see Official Journal of the European Patent Office, No. 12/82